# EUROPEAN PATENT SPECIFICATION

(11) **EP 1 829 953 B1**
(45) Date of publication and mention of the grant of the patent: **11.11.2009**
(21) Application number: 04822487.7
(22) Date of filing: 03.12.2004
(51) Int. Cl.: C10M 171/00, C10M 103/00, C10M 103/02, C10M 171/06, C10M 177/00, B81B 5/00, B81C 5/00, B82B 1/00, B82B 3/00, F16C 33/10, F16C 33/66, G04B 13/02, G04B 31/08, H02K 5/16, C01B 31/02, C10N 10/12, C10N 20/00, C10N 20/06, C10N 30/06, C10N 40/02

(54) **SLIDE MATERIAL, PROCESS FOR PRODUCING THE SAME AND APPARATUS UTILIZING THE SLIDE MATERIAL**
GLEITMATERIAL, HERSTELLUNGSVERFAHREN DAFÜR UND VORRICHTUNG, BEI DER DAS GLEITMATERIAL ZUR ANWENDUNG KOMMT
MATERIAU GLISSANT, SON PROCEDE DE FABRICATION ET APPAREIL L'UTILISANT

(43) Date of publication of application: 05.09.2007
(73) Proprietor: Seiko Instruments Inc., Chiba-shi, Chiba 261-8507 (JP); Aichi University of Education, Kariya-shi, Aichi, 448-8542 (JP)
(72) Inventor: MIURA, Kouji, Aichi University of Education, Kariya-shi, Aichi 448-8542 (JP)
(74) Representative: Ritscher, Thomas
(86) International application number: PCT/JP2004/018016
(87) International publication number: WO 2006/059391

(56) References cited:
- JP-A- 09 025 490
- JP-A- 11 292 629
- JP-A- 2002 105 623
- JP-A- 2003 062 799
- JP-A- 2003 313 571
- JP-A- 2004 503 388
- US-A1- 2004 033 189
- FUHRER, HOU, XIANG, ZETTL: "C60 Intercalated Graphite Predictions and Experiments" SOLID STATE COMMUNICATIONS, vol. 90, no. 6, May 1994 (1994-05), pages 357-360, XP002458698
- "Kirk Othmer Encyclopedia of Chemical Technology Vol.4" 1978, JOHN WILEY & SONS , NEW YORK , XP002458699 * page 556 * * page 691 * * page 703 - page 704 *

## Description

The present invention relates to a sliding material, a manufacturing method therefor and a device employing the slide material.

Lubricants (sliding materials) that reduce friction between bodies have transitioned from solid lubricants to fluid lubricants. However, since the use of fluid lubricants is restricted in environments where fluids cannot be used such as vacuums and high temperature environments, problems arise such as insufficient reduction in frictional force and low durability. Also, with the appearance of tiny machinery such as micromachines and nanomachines, the development of a lubricant and lubrication system that can be used even in tiny machinery is eagerly awaited.

As a lubrication system applicable to tiny machinery, a lubrication system has been proposed that sandwiches carbon ball molecules or carbon tube molecules between graphite substrates (JP 2003-62799 A1). In this lubrication system, C₆₀ molecules are vapor-deposited on a graphite substrate surface to form a monolayer C₆₀ molecular film. By utilizing the rolling of the C₆₀ molecules, a separate graphite substrate that is placed on the C₆₀ molecular film can be made to slide.

However, in the case of forming a C₆₀ molecular film by vapor-deposition, regulating the C₆₀ molecular film formed on the graphite substrate surface to a monolayer is difficult, and it is easy in practice for the C₆₀ molecules to overlap over two layers. When a bi-layer C₆₀ molecular film is formed, rolling of the C₆₀ molecules is hindered, which increases the friction between the two graphite substrates. Fabrication by the vapor-deposition method of a lubrication system that can minimize friction between graphite substrates has involved such difficulties. Also, the durability of the lubrication system that sandwiches carbon ball molecules or carbon tube molecules between graphite substrates is not sufficiently satisfactory.

Fuhrer et al., Solid State Communications, Vol. 90, No. 6, pp. 357-360 disclose an intercalation compound of ball-shaped C60-fullerene monolayers
inserted in the interlayers of the hexagonal crystal layers of graphite.

This prior art intercalation compound is produced by widening the interlayers of the hexagonal graphite crystal layers of the hexagonal graphite crystal layers and then inserting the ball-shaped C60 molecules in a benzene solution.

US 2004/033189 to D.M. Kaschak et al. discloses a method of widening the interlayers of hexagonal graphite crystal layers before inserting possible intercalation compounds into the interlayers. Intercalation, according to this reference is achieved by means of an oxidizing agent.

The object of the present invention is to provide a sliding material that can be used in machines/devices of various sizes ranging from heavy machinery such as automobiles to nanomachines without restrictions on the environment it can be used, can minimize friction compared to conventional types, and has superior durability; a method of manufacture that can readily manufacture the sliding material; and a device that uses the sliding material.

The sliding material of a present invention is as defined in claim 1.

The structure in which ball-shaped molecules are inserted in interlayers of the hexagonal crystals preferably exists in plurality repetition in the thickness direction.

The ball-shaped molecules preferably form a monolayer in each interlayer of the hexagonal crystals.

The ball-shaped molecules preferably have five-member rings or six-member rings of carbon.

The distance between ball-shaped molecules in the thickness direction is preferably 1.4 nanometers or less.

Also, the sliding material of the present invention may be a mixture of the sliding material and a solid or fluid, and may be one provided on a solid surface.

The method of manufacturing the sliding material of the present invention is as defined in claim 9.

In the manufacturing method, it is preferable to insert the ball-shaped molecules in the interlayer of the hexagonal crystals by sublimating the ball-shaped molecules.

The device of the present invention is characterized by having a sliding portion in which at least one member slides with respect to another member, and being provided with the sliding material of the present invention on the surface of at least one member of the sliding portion.

A timepiece of the present invention is a timepiece having at least one set of gears that transmits power and a changeover mechanism that corrects the time, characterized by the gears and/or the changeover mechanism having a sliding portion in which at least one member slides with respect to another member and being provided with the sliding material of the present invention on the surface of at least one member of the sliding portion.

The motor of the present invention is characterized by having a sliding portion in which at least one member slides with respect to another member, and being provided with the sliding material of the present invention on the surface of at least one member of the sliding portion.

The sliding material of the present invention can be used in machines/devices of various sizes ranging from heavy machinery such as automobiles to nanomachines without restrictions on the environment it can be used, is highly effective in reducing friction compared to conventional types, and has superior durability.

The sliding material of the present invention can be readily manufactured according to the manufacturing method for the sliding material of the present invention.

The device, timepiece, and motor of the present invention can minimize friction in the sliding portion and can maintain the low friction state for a long period.

The sliding material of the present invention is an intercalation compound having hexagonal crystals that form a layer structure and ball-shaped molecules inserted (intercalated) in the interlayers of the hexagonal crystals. The structure of the ball-shaped molecules inserted in the interlayers of the hexagonal crystals preferably exists in multiple repetition in the thickness direction.

Specific examples of the hexagonal crystal forming a layer structure include graphite and molybdenum disulfide, and the like, with graphite being selected. The graphite has a layer structure in which a large number of planar layers of connected six-member rings of carbon atoms are overlapped. The graphite shape may be suitably selected in accordance with the use of the sliding material, with examples including a film shape and powder shape.

Since the ball-shaped molecules are required to have a strong interaction with the graphite, those having five-member rings or six-member rings of carbon are preferred. Also, since the ball-shaped molecules are required to easily enter the graphite interlayer and be stable, those having a diameter of 0.7 nanometer or more and 0.8 nanometer or less are preferred.

Fullerenes are used as the ball-shaped molecules. Fullerenes are hollow, shell-shaped carbon ball molecules closed by a network of five-member rings or six-member rings of carbon. Examples of fullerenes include C₆₀ molecules, C₇₀ molecules, C₇₆ molecules, C₇₈ molecules, C₈₀ molecules, C₈₂ molecules, C₈₄ molecules, C₈₆ molecules, C₈₈ molecules, C₉₀ molecules, C₉₂ molecules, C₉₄ molecules, C₉₆ molecules, etc. C₆₀ molecules and C₇₀ molecules are preferred as fullerene molecules since they easily roll, and as a result a sliding material is obtained that is effective in reducing friction.

A specific example is described below in which the hexagonal crystals are graphite and the ball-shaped molecules are C₆₀ molecules.

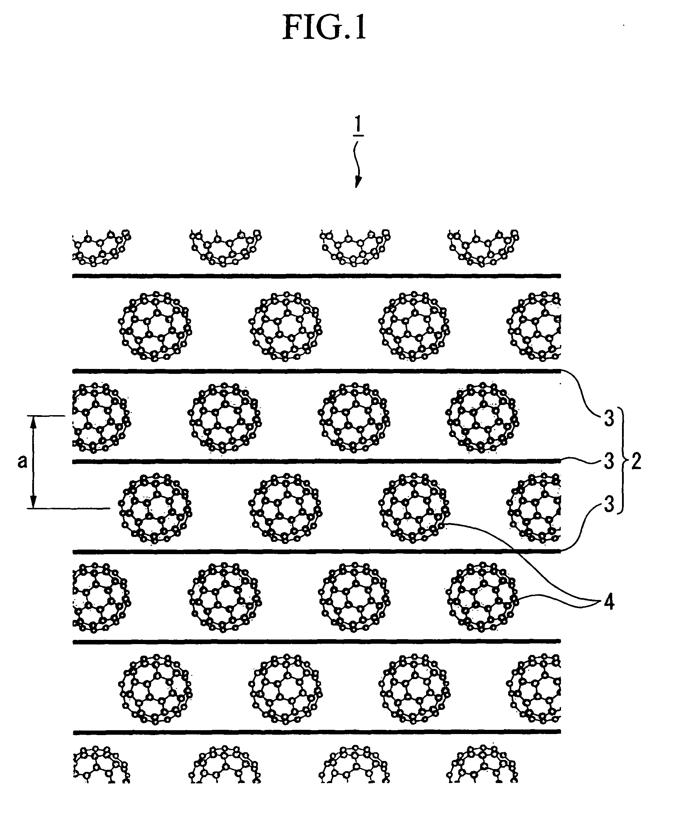

FIG 1 is a structural model showing an example of the sliding material of the present invention. A sliding material 1 is constituted by graphite 2 and C₆₀ molecules 4 that are inserted between graphite layers 3. The structure in which the C₆₀ molecules 4 are inserted between the graphite layers 3 is repeated in plurality in the thickness direction.

The C₆₀ molecules 4 are aligned to form a monolayer between the graphite layers 3. By having the C₆₀ molecules 4 form a monolayer between the graphite layers 3, the molecules easily roll, and as a result a sliding material is obtained that is effective in reducing friction.

It is preferable that the layer formed by the C₆₀ molecules 4 have a dense structure with small gaps between the C₆₀ molecules so as to further facilitate the rolling of the C₆₀ molecules 4. A dense structure specifically means a structure in which the C₆₀ molecules 4 are aligned so that the center-to-center spacing between adjacent C₆₀ molecules 4 and 4 in the planar direction is 1 nanometer.

The distance between the C₆₀ molecules 4 in the thickness direction is preferably 1.4 nanometers or less to ensure a stable structure. The distance between the C₆₀ molecules 4 in the thickness direction is, as shown in FIG 1, a center-to-center spacing a between C₆₀ molecules 4 and 4 that are adjacent via the graphite layers 3. The lower limit of the center-to-center spacing a is 1.3 nanometers.

The sliding material of the present invention may be mixed with a solid or fluid, and this mixture may be used as the sliding material (solid lubricant or fluid lubricant). A solid that is mixed with the sliding material includes a resin in which the base resin is polystyrene, polyethylene terephthalate, polycarbonate, polyacetal (polyoxymethylene), polyamide, denatured polyphenylene ether, polybutylene terephthalate, polyphenylene sulfide, polyether ether ketone, or polyetherimide. A fluid that is mixed with the sliding material includes lubricating oil such as gear oil, machine oil, bearing oil, and precision instrument oil.

Also, the sliding material of the present invention may be provided on a solid surface, with this solid being used as the sliding material. This sliding material may be a layer of a sliding material that is formed by applying the sliding material on a solid surface, with examples including nickel plating, zinc plating, aluminum plating, copper plating, gold plating, and the like. A solid on whose surface the sliding material is applied includes resins such as polycarbonate and polyacetal, brass, steel, aluminum alloy, copper alloy, magnesium alloy, and the like.

The sliding material of the present invention is produced by a step that widens the interlayer of hexagonal crystals forming a layer structure (hereafter referred to as the expansion step) and a step that inserts ball-shaped molecules in the interlayer of the hexagonal crystals (hereafter referred to as the intercalation step).

The interlayer of the hexagonal crystals is widened by immersing the hexagonal crystals in a liquid mixture of sulfuric acid and nitric acid, drying the hexagonal crystal, and then applying heat. The mixture ratio of the sulfuric acid and nitric acid (sulfuric acid:nitric acid) is preferably 4:1 (volumetric ratio). The concentrations of the sulfuric acid and nitric acid are preferably 100%. The immersion time is preferably 16 to 17 hours, and the temperature of the liquid mixture during immersion is preferably 20°C to 30°C. Also, the immersion is preferably performed while agitating the liquid mixture and the hexagonal crystals. According to the invention heating of the hexagonal crystals after drying is performed at 1000 to 1100°C.

The insertion step is a step that specifically inserts the ball-shaped molecules in the interlayer of the hexagonal crystals widened by the expansion step by sublimating the ball-shaped molecules. Sublimation of the ball-shaped molecules is performed by heating to a temperature at which the ball-shaped molecules sublimate. In the case of the ball-shaped molecules being C₆₀ molecules, heating to 550 to 600°C is performed. The heating time is preferably 2 to 3 weeks. Also, in order to prevent oxidation of the ball-shaped molecules, the sublimation of the ball-shaped molecules is performed in a vacuum or in an atmosphere of an inert gas such as nitrogen gas or the like.

Moreover, the manufacturing method of the sliding material of the present invention preferably has a step in which the ball-shaped molecules inserted in the interlayer of the hexagonal crystals form a monolayer in each interlayer (hereafter referred to as the monolayering step). When inserting the ball-shaped molecules in the interlayer of the hexagonal crystals by sublimating the ball-shaped molecules, normally since the ball-shaped molecules inserted in the interlayer of the hexagonal crystals are inserted so as form a monolayer in each interlayer, the intercalation step and the monolayering step proceed simultaneously.

The device of the present invention has a sliding portion in which at least one member slides with respect to another member, and provides the sliding material of the present invention on the surface of at least one member of the sliding portion.

Examples of the device include a timepiece, a motor, an automobile, a generator, an airplane, a marine vessel, a motorcycle, a camera, a video camera, spectacles, measuring equipment, photographic equipment, sound recording equipment, sound recording and video recording equipment, printing machines, machining equipment, processing machinery, assembly equipment, conveyance equipment, haulage equipment, dispensing equipment (dispenser), and machinery having bearings, and the like.

Examples of the sliding portion of a device include the gear tooth flank of a timepiece, the bearing portion of the gearing of a timepiece, a brush of a motor, a stator, a rotor, a car motor piston, the turbine bearing portion of a generator, a camera shutter, spectacle frames, and the like.

A timepiece that is an example of a device of the present invention includes one having at least one set of gears for transmitting power and a changeover mechanism that corrects the time.

The gears and the changeover mechanism have a sliding portion in which at least one member slides with respect to another member, with the sliding material of the present invention provided on the surface of at least the one member of the sliding

In the drawings:
Fig. 1 is a structural model showing an example of a sliding material of the present invention.
Fig. 2 is a drawing showing one manufacturing step of the sliding material of the example.
Fig. 3 is a drawing showing one manufacturing step of the sliding material of the example.
Fig. 4 is a drawing showing one manufacturing step of the sliding material of the example.
Fig. 5 is a photograph and a schematic view of the sliding material obtained in the example.
Fig. 6 is a high-resolution electron microscope image of the sliding material obtained in the example.
Fig. 7 is a diffraction pattern of the sliding material obtained in the example.
Fig. 8 is a graph showing the frictional characteristics (load 0 nN) of the sliding material obtained in the example.
Fig. 9 is a graph showing the frictional characteristics (load 10 nN) of the sliding material obtained in the example.
Fig. 10 is a graph showing the frictional characteristics (load 20 nN) of the sliding material obtained in the example.
Fig. 11 is a graph showing the frictional characteristics (load 60 nN) of the sliding material obtained in the example.
Fig. 12 is a graph showing the frictional characteristics (load 100 nN) of the sliding material obtained in the example.
Fig. 13 is a graph showing the frictional characteristics (load 10 µN) of the sliding material obtained in the example.
Fig. 14 is a plan view showing the outline shape of the movement in the example of an analog timepiece of the present invention, seen from the front.
Fig. 15 is an outline partial sectional view showing the portion of the second hand from the second motor in the example of an analog timepiece of the present invention.
Fig. 16 is an outline partial sectional view showing the portion of the minute hand from the minute motor in the example of an analog timepiece of the present invention.
Fig. 17 is an outline partial sectional view showing the portion of the second hand from the second motor in the example of an analog timepiece of the present invention.
Fig. 18 is a plan view showing the outline shape of the front of the movement in the example of the mechanical timepiece of the present invention.
Fig. 19 is an outline partial sectional view of the example of the mechanical timepiece of the present invention, showing a portion of the pallet fork from the barrel.
Fig. 20 is an outline partial sectional view of the example of the mechanical timepiece of the present invention, showing a portion of the balance from the escapement wheel.
Fig. 21 is an outline partial sectional view of the example of the mechanical timepiece of the present invention, showing a portion of the winding stem, the setting wheel, and the minute wheel.

### Example 1

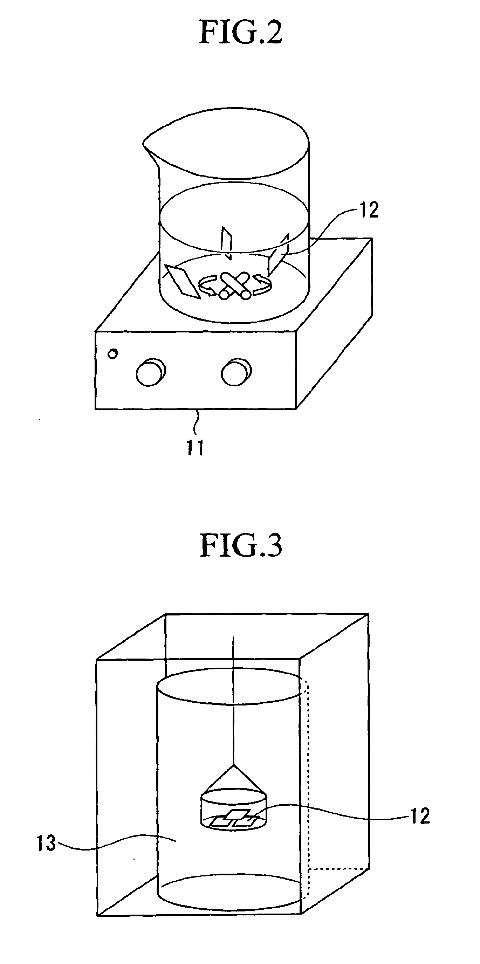

First, 100% sulfuric acid and 100% nitric acid were mixed at a ratio of sulfuric acid:nitric acid = 4:1 (volume ratio), and Highly Oriented Pyrolytic Graphite (HOPG) (available from Veeco, Grade-ZYH) measuring 2.2 mm x 2.2 mm x 0.2 mm was put into 50 ml of the liquid mixture, and the mixture was then agitated for 16 hours at 20°C using a stirrer 11 as shown in FIG. 2. A HOPG 12 was removed, washed with pure water and then neutralized with acid.

As shown in FIG 3, the HOPG 12 was placed in a furnace 13 and heated for 1 to 2 minutes at 100°C to completely evaporate the moisture of the HOPG 12, and then additionally heated for 15 seconds at 1050°C to widen the interlayer space of the HOPG 12.

Subsequently, 7.54 mg of C₆₀ molecules (made by MTR with a purity of 99.98% or greater) and 3.77 mg of interlayer-widened HOPG was put in a quartz tube, which was sealed after being evacuated.

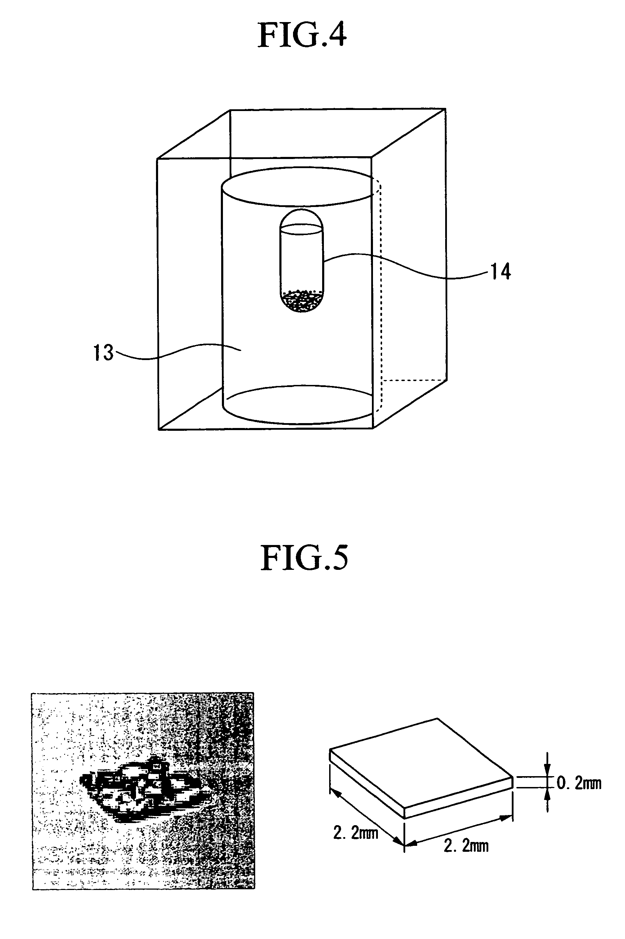

As shown in FIG 4, a quartz tube 14 in which C₆₀ molecules and HOPG were sealed was placed in the furnace 13 and heated for two weeks at 600°C to insert sublimated C₆₀ molecules into the HOPG interlayers. By doing so, a 2.2 mm x 2.2 mm x 0.2 mm sliding material was obtained as shown in FIG 5.

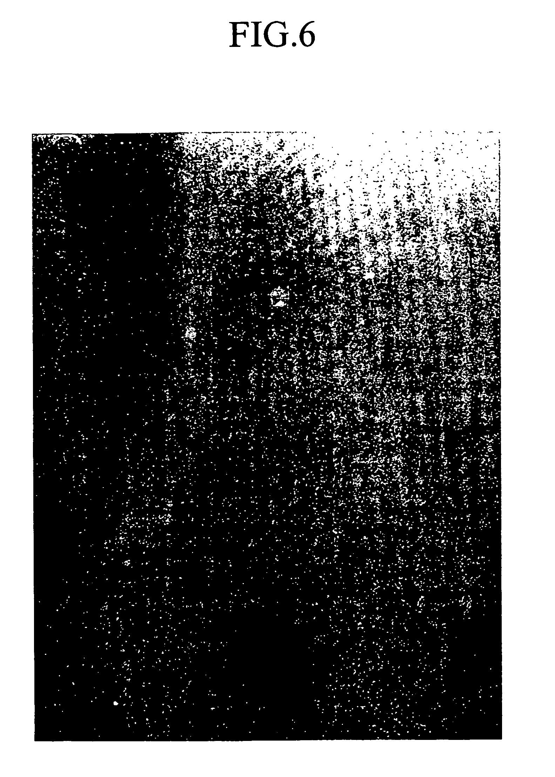

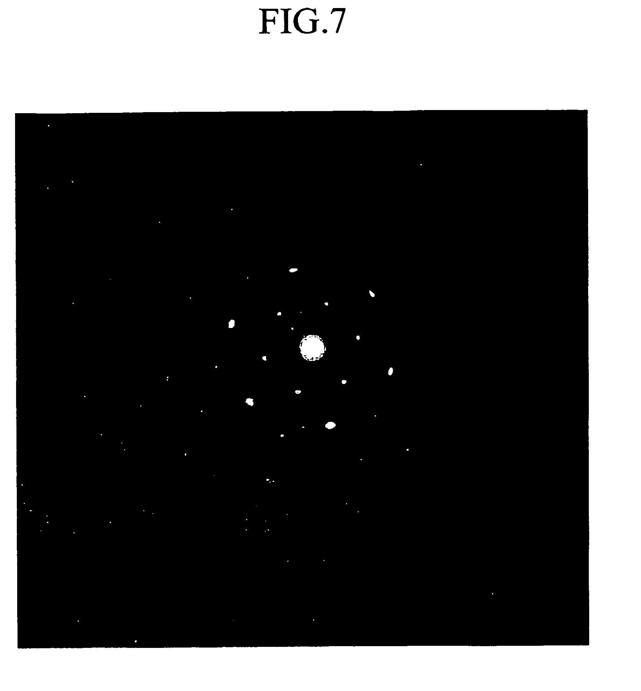

The structure of the obtained sliding material was confirmed using a high-resolution electron microscope (made by JEOL, model JEM-2000EX). A high-resolution electron microscope image is shown in FIG 6, and the diffraction pattern is shown in FIG 7. Also the structural model to be obtained is shown in FIG 1.

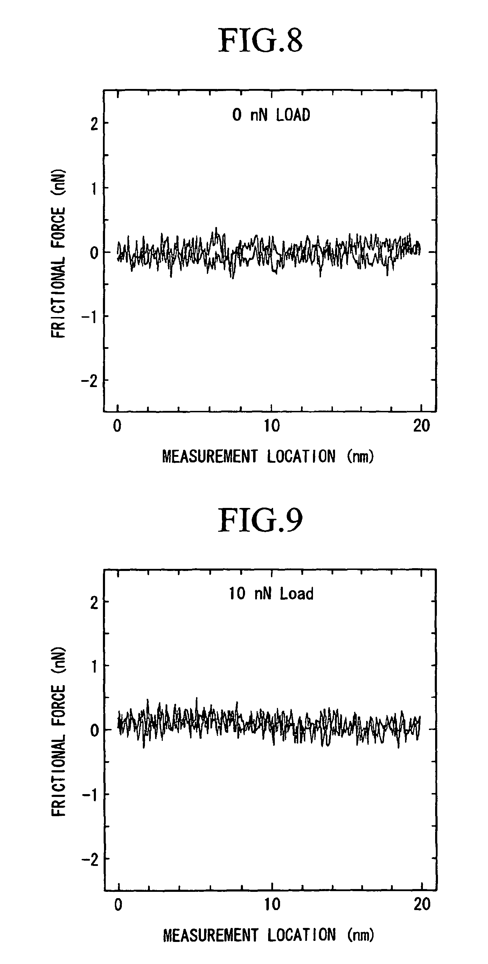

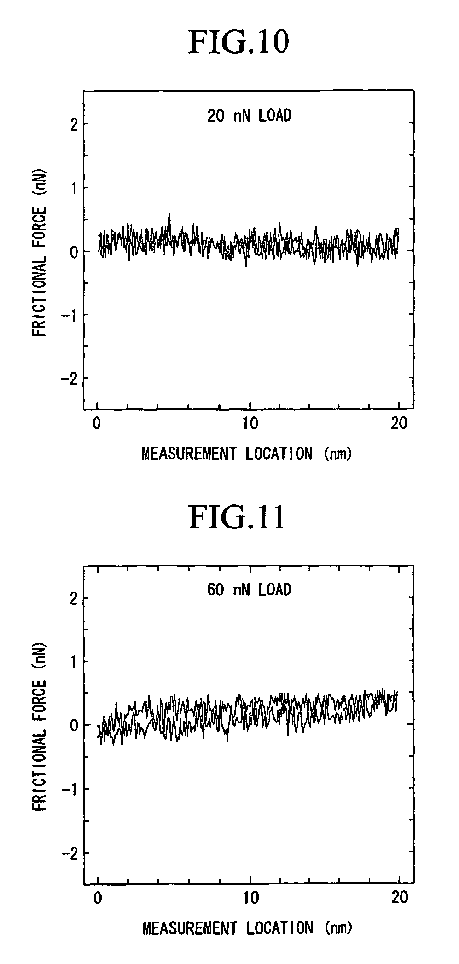

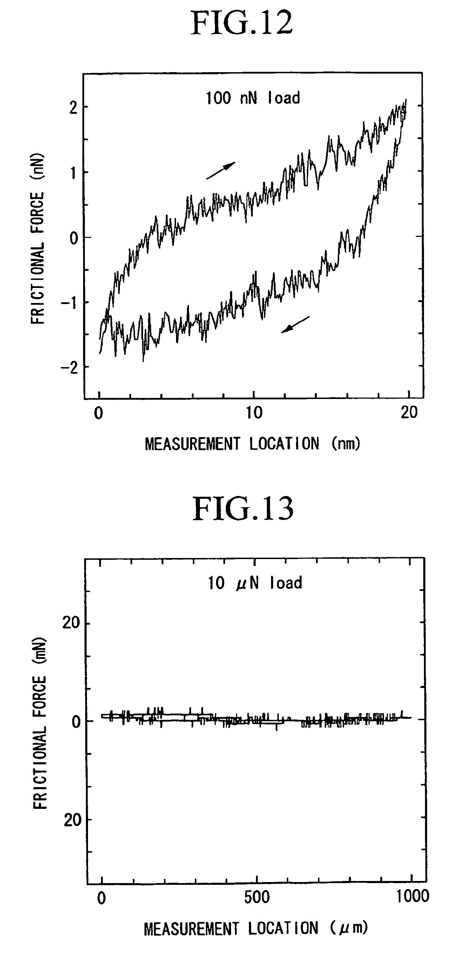

The friction characteristics of the obtained sliding material were investigated using a frictional force microscope (made by Seiko Instruments Inc., model SPI300). Specifically, a probe was made to travel back and forth over the sliding material surface while applying a fixed load, at which time the frictional force was measured. The result of load 0 nN is shown in FIG 8, the result of load 10 nN is shown in FIG 9, the result of load 20 nN is shown in FIG 10, the result of load 60 nN is shown in FIG 11, the result of load 100 nN is shown in FIG 12, and the result of load 10 µN is shown in FIG. 13. In the results of FIGS. 8 to 13, the frictional force was extremely close to zero within the range of the limit of measurement of the frictional force microscope (the frictional force being 0.1 nN).

From the result of FIGS. 8 to 13, the state in which the static friction force and the dynamic friction force approach zero is realized at a load of 100 nN. Also, no anisotropy of the frictional force was observed.

### Example 2.

An example is now explained that provides the sliding material of the first example in the sliding portion of an analog timepiece.

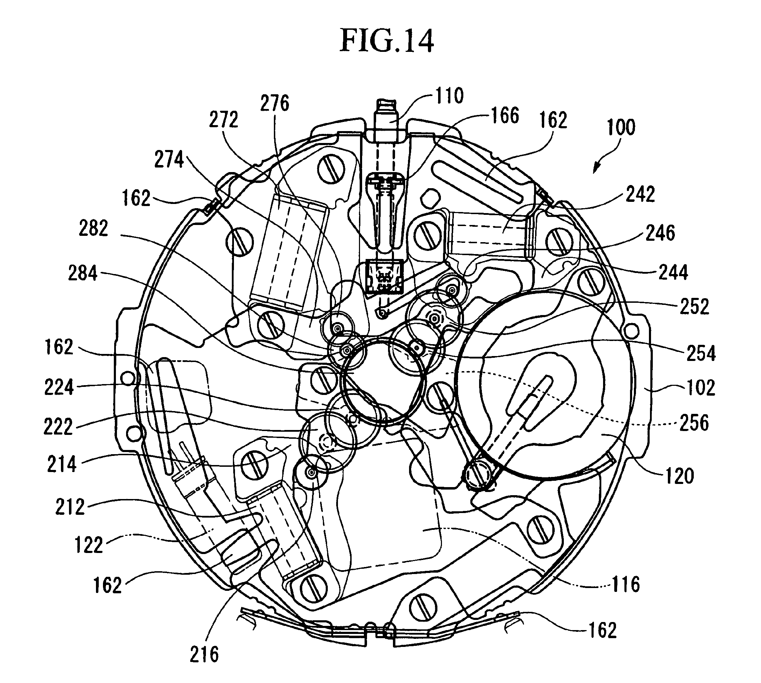

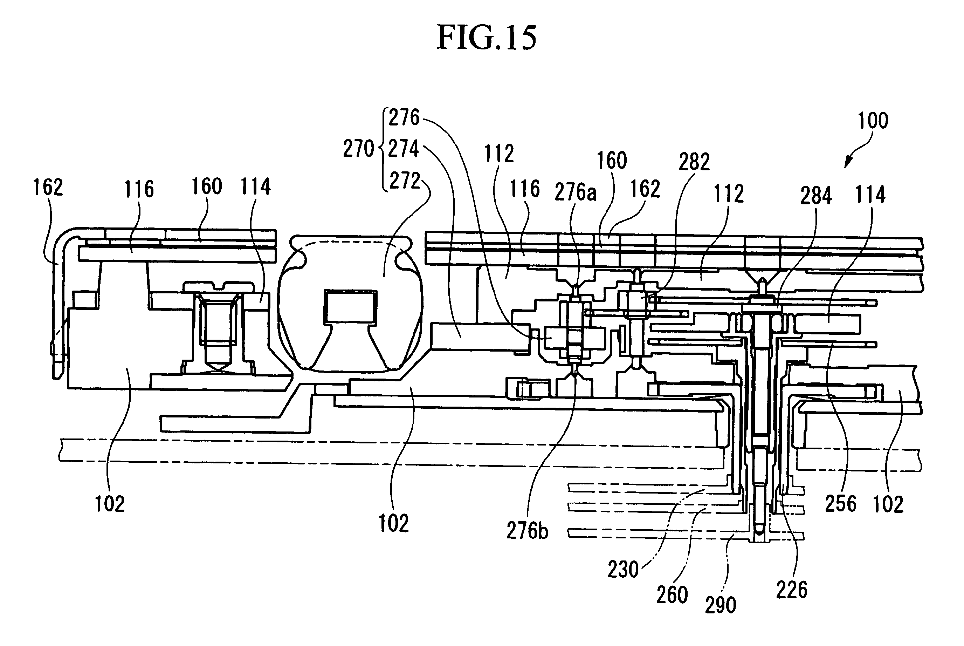

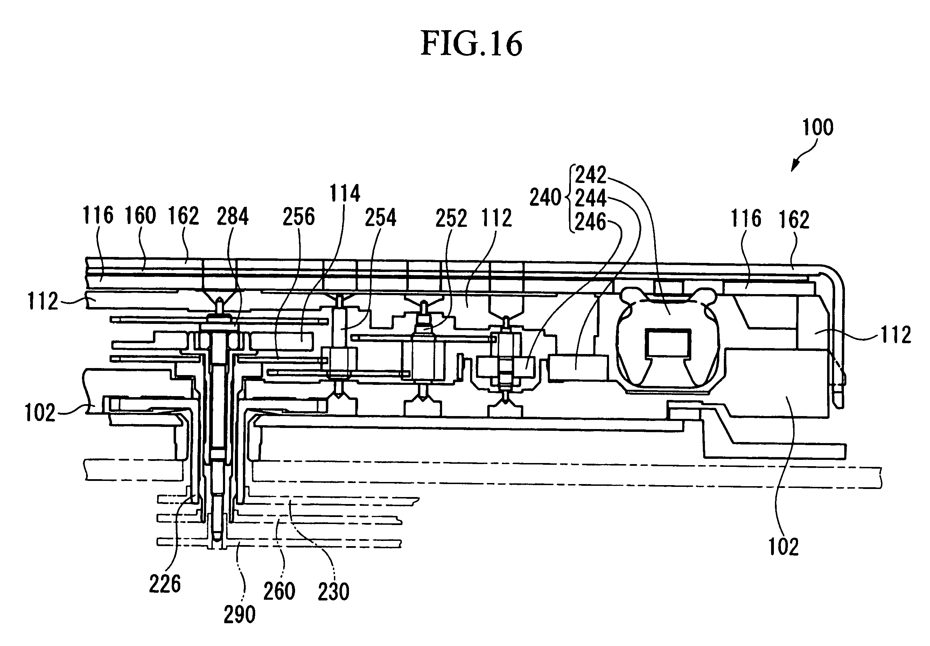

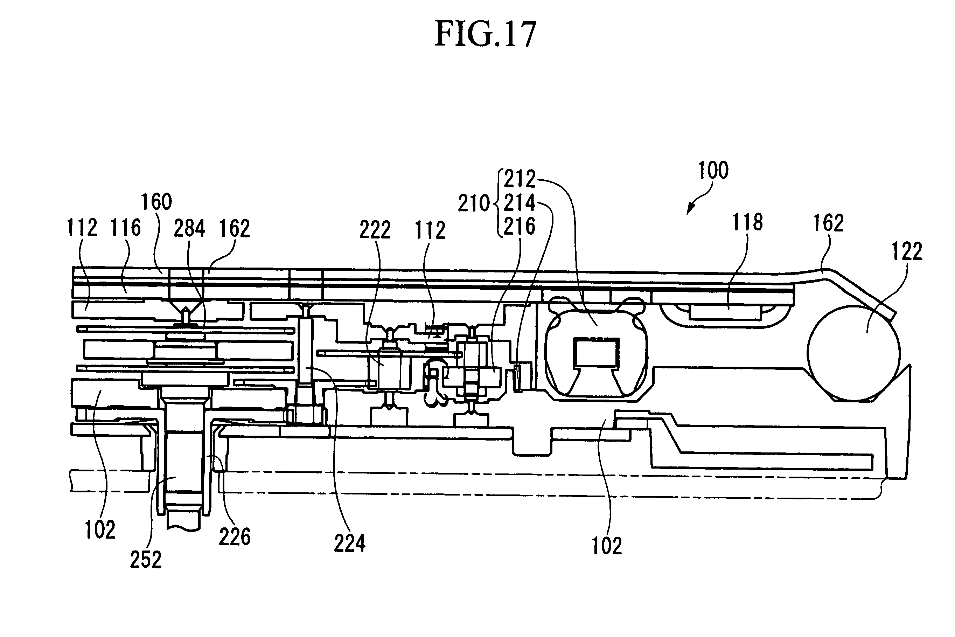

The movement (machinery) of the analog timepiece used in the second example shall be explained first referring to FIGS. 14 to 17.

A movement (machinery) 100 of an analog timepiece is provided with a support member of the movement 100 constituted from a main plate 102, a train wheel bridge 112, and a second wheel bridge 114; a winding stem 110 that is incorporated so as to be pivotable in a winding stem guide hole of the main plate 102; an insulating plate 160; a switch spring 162; a circuit block 116 that is fixed to the main plate 102 and the train wheel bridge 112 by the switch spring 162 through the insulating plate 160; a battery 120 that constitutes the power source of the analog timepiece; an IC 118 and a crystal oscillator 122 that are attached to the circuit block 116; a changeover spring 166 for determining the position of the axial direction of the winding stem 110 that is integrally formed with the switch spring 162; an hour motor 210 constituted from a coil block A212, a stator A214, and an hour rotor 216; an hour display wheel train constituted from an intermediate minute wheel 222, a minute wheel 224, and an hour wheel 226; a minute motor 240 constituted from a coil block B242, a stator B244, and a minute rotor 246; a minute display wheel train constituted from a second intermediate wheel B252, a second intermediate wheel A254, and a minute wheel 256; a second motor 270 constituted from a coil block C272, a stator C274, and a second rotor 276; and a second display wheel train constituted from a fifth wheel 282 and a second wheel 284.

The movement (machinery) 100 is constituted so as to show the "hour" of the present time with an hour hand 230 by rotation of the hour display wheel train from rotation of the hour motor 210. It is also constituted so as to show the "minute" of the present time with a minute hand 260 by rotation of the minute display wheel train from rotation of the minute motor 240. It is also constituted so as to show the "second" of the present time with a second hand 290 by rotation of the second display wheel train from rotation of the second motor 270.

A rechargeable secondary battery can be used as the battery 120, and a rechargeable capacitor can also be used. The crystal oscillator 122 constitutes the source oscillation of the analog timepiece, and oscillates at, for example, 32, 768 Hertz.

In the movement (machinery) 100, the sliding material of the first example was provided as follows in the bearing portion of the second motor 270 (the upper bearing portion constituted from the second motor bearing portion 276a and the train wheel bridge 112, and the lower bearing portion constituted from the second motor bearing portion 276b and the main plate 102).

First, a portion of the sliding material obtained in the first example was separated to obtain a sliding material with a thickness of 1 µm.

An epoxy-based adhesive was applied at a thickness of 0.1 µm on the second motor bearing portion 276a and a portion of the train wheel bridge 112 in contact with the second motor bearing portion 276a. Simultaneously, an epoxy-based adhesive was applied to the second motor bearing portion 276b and a portion of the main plate 102 in contact with the second motor bearing portion 276b.

Then, the separated sliding material was attached to the applied epoxy-based adhesive, and the epoxy-based adhesive was sufficiently dried by being left to stand for one hour at 25°C.

Similarly, the sliding material of the first example was also provided in the bearing portions of the hour motor 210, the hour display wheel train, the minute motor 240, the minute display wheel train, and the second display wheel train. As a result, since friction loss of the sliding portion could be reduced, the battery life could be extended.

### Example 3

In the movement (machinery) 100, the sliding material of the first example was provided as follows in the bearing portion of the second motor 270 (the upper bearing portion constituted from the second motor bearing portion 276a and the train wheel bridge 112, and the lower bearing portion constituted from the second motor bearing portion 276b and the main plate 102).

First, the sliding material obtained in the first example was ground to a particle diameter of 0.1 to 1 µm. Then a lubricant for clocks (SYNTHETIC OIL 9010 (made by MOEBIUS)) and the ground-up sliding material were mixed at a ratio of 10 parts sliding material to 100 parts lubricant.

The lubricant mixed with the sliding material was applied on the second motor bearing portion 276a and a portion of the train wheel bridge 112 in contact with the second motor bearing portion 276a. Simultaneously, the lubricant mixed with the sliding material was applied to the second motor bearing portion 276b and a portion of the main plate 102 in contact with the second motor bearing portion 276b.

Similarly, the sliding material of the first example was also provided in the bearing portions of the hour motor 210, the hour display wheel train, the minute motor 240, the minute display wheel train, and the second display wheel train. As a result, since friction loss of the sliding portion could be reduced, the battery life could be extended.

### Example 4

Explained below is an example that provides the sliding material of the first example in the sliding portions of a mechanical timepiece in which a main spring serves as the power source.

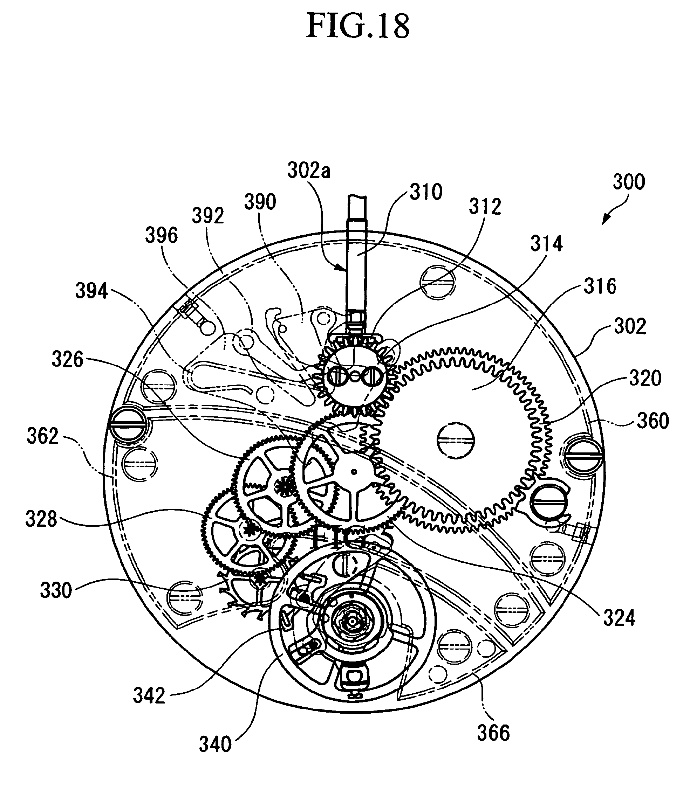

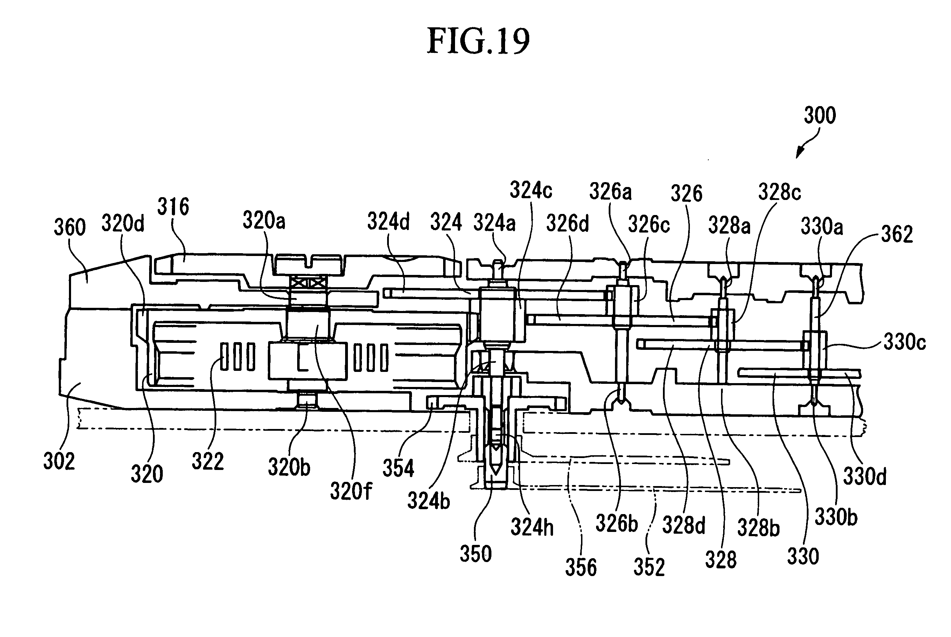

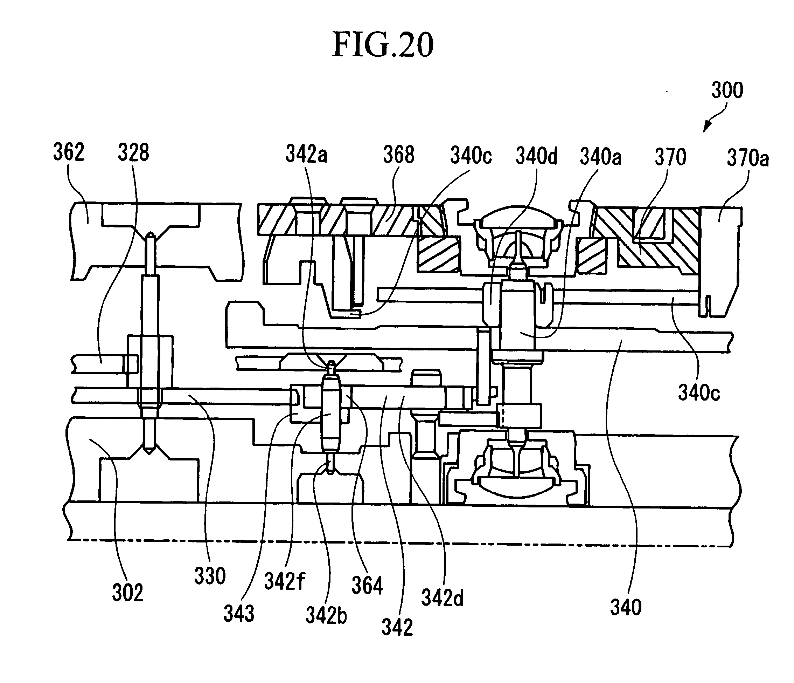

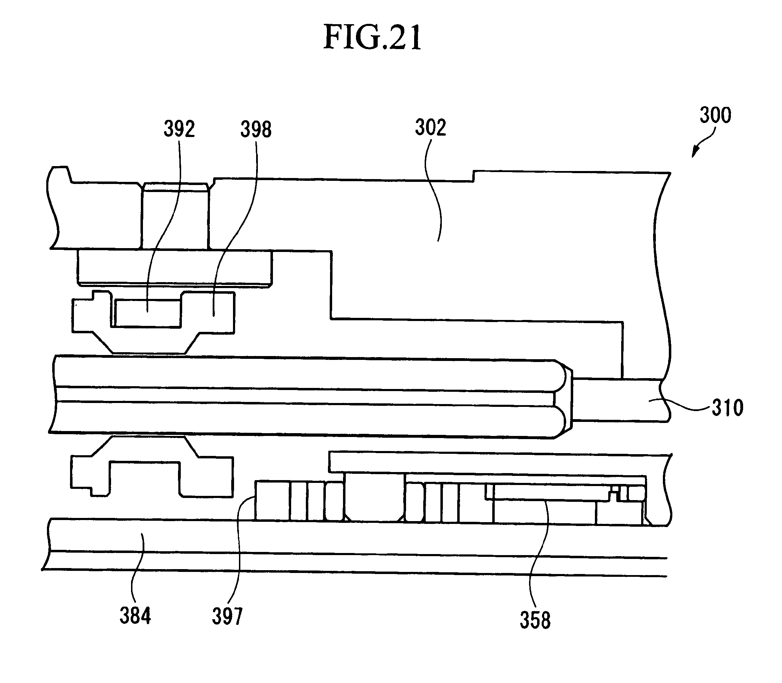

First, the movement (machinery) of the mechanical timepiece used in the fourth example shall be explained first referring to FIGS. 18 to 21.

The movement (machinery) 300 of the mechanical timepiece has a main plate 302 that constitutes a base plate of the movement. A winding stem 310 is incorporated so as to be pivotable in a winding stem guide hole 302a of the main plate 302. Normally, among the two sides of the main plate, the dial plate-side thereof is referred to as the "back side" of the movement, and the side opposite the dial plate side is referred to as the "front side" of the movement. The wheel train incorporated in the "front side" of the movement is referred to as the "outside wheel train", and wheel train incorporated in the "back side" of the movement is referred to as the "backside wheel train". The position in the axial direction of the winding stem 310 is determined by a changeover device that includes a setting lever 390, a yoke 392, a latch spring 394, and a yoke friction spring 396. A winding pinion 312 is rotatably provided in a guide shaft portion of the winding stem 310.

A clutch wheel 398 is disposed so as to be coaxial with the winding stem 310 with respect to the angle portion of the winding stem 310. When the winding stem 310 is rotated to the state of being in a first winding stem position (zeroth step) that is nearest to the inside of the movement along the axis of rotation, the winding pinion 312 is constituted to turn via rotation of the clutch wheel 398. A crown wheel 314 is constituted so as to rotate by rotation of the winding pinion 312. A ratchet wheel 316 rotates by rotation of the crown wheel 314. Rotation of the ratchet wheel 316 winds up the main spring 322 housed in a barrel wheel 320. A center wheel 324 is constituted so as to rotate by rotation of the barrel wheel 320. An escapement wheel 330 rotates through rotation of a fourth wheel 328, a third wheel 326, and the center wheel 324. The barrel wheel 320, the center wheel 324, the third wheel 326, and the fourth wheel 328 constitute the outside wheel train.

A setting wheel 397 is rotatably disposed with respect to the main plate 302. A minute wheel 358 is rotatably disposed with respect to the main plate 302. The gear portion of the setting wheel 397 is constituted to mesh with the gear portion of the minute gearing of the minute wheel 358. The gear portion of the minute gearing of the minute wheel 358 is constituted so as to mesh with the gear portion of a cannon pinion 350. The pinion portion of the minute pinion of the minute wheel 358 is constituted to mesh with the gear portion of a cylinder wheel 354. A minute pusher 384 supports the setting wheel 397 and the minute wheel 358 so as to be rotatable with respect to the main plate 302. When the winding stem 310 is rotated to the state of being in a second winding stem position (first step) on the outside of the movement along the axis of rotation, the setting wheel 397 is constituted to rotate by rotation of the clutch wheel 398. Moreover, when the winding stem 310 is rotated to the state of being in the first step, the minute wheel 358 is constituted to rotate by rotation of the setting wheel 397. In this state, when the minute wheel 358 rotates, the cannon pinion 350 and the cylinder wheel 354 rotate, and accordingly an hour hand 356 and a minute hand 352 rotate, so that time correction of the timepiece can be performed.

An escapement/controller that controls the rotation of the outside wheel train includes a balance 340, an escapement wheel 330, and an pallet fork 342. The balance 340 includes a balance staff 340a, a balance wheel and balance spring 340c. Based on rotation of the center wheel 324, the cannon pinion 350 rotates simultaneously. The minute hand 352 attached to the cannon pinion 350 shows "minutes". A slip mechanism with respect to the center wheel 324 is provided in the cannon pinion 350. Based on rotation of the cannon pinion 350, the cylinder wheel 354 rotates via rotation of the minute wheel 358. The hour hand 356 attached to the cylinder wheel 354 shows the "hour". The balance spring 340c is a flat spring with a swirling (spiral) shape having a plurality of windings. The inner end portion of the balance spring 340c is fixed to a collet 340d that is fixed to the balance staff 340a, and the outer end portion of the balance spring 340c is fixed by a screw fastening through a stud 370a that is attached to a stud support 370 that is fixed to a balance bridge 366. A regulator pin 368 is rotatably attached to the balance bridge 366. The balance 340 is supported so as to be rotatable with respect to the main plate 302 and the balance bridge 366.

The barrel wheel 320 is provided with a barrel drum 320d, a barrel arbor 320f, and a main spring 322. The barrel arbor 320f includes an upper shaft 320a and a lower shaft 320b. The barrel arbor 320f is formed with a metal such as carbon steel. The barrel drum 320d is formed with a metal such as brass. The center wheel 324 includes an upper shaft 324a, a lower shaft 324b, a pinion portion 324c, a gearwheel portion 324d, and a bead portion 324h. The pinion portion 324c of the center wheel 324 is constituted so as to mesh with the barrel drum 320d. The upper shaft 324a, the lower shaft 324b, and the bead portion 324b are formed with a metal such as carbon steel. The gearwheel portion 324d is formed with a metal such as brass. The third wheel 326 includes an upper shaft 326a, a lower shaft 326b, a pinion portion 326c, and a gearwheel portion 326d. The pinion portion 326c of the third wheel 326 is constituted so as to mesh with the gearwheel portion 324d. The fourth wheel 328 includes an upper shaft 328a, a lower shaft 328b, a pinion portion 328c, and a gearwheel portion 328d. The upper shaft 328a and the lower shaft 328b are formed with a metal such as carbon steel. The gearwheel portion 328d is formed with a metal such as brass. The escapement wheel 330 includes an upper shaft 330a, a lower shaft 330b, a pinion portion 330c, and a gearwheel portion 330d. The pinion portion 330c of the escapement wheel 330 is constituted so as to mesh with the gearwheel portion 328d. The gearwheel portion 328d of the escapement wheel 330 is constituted so as to mesh with a pallet stone 343 that is bonded to the pallet fork 342. The pallet fork 342 is provided with an pallet fork (incomplete) 342d and an pallet staff 342f. The pallet staff 342f includes an upper shaft 342a and a lower shaft 342b.

The barrel wheel 320 is supported so as to be rotatable with respect to the main plate 302 and a barrel bridge 360. That is, the upper shaft 320a of the barrel arbor 320f is supported so as to be rotatable with respect to the barrel bridge 360. The lower shaft 320b of the barrel arbor 320f is supported so as to be rotatable with respect to the main plate 302. The center wheel 324, the third wheel 326, the fourth wheel 328, and the escapement wheel 330 are supported so as to be rotatable with respect to the main plate 302 and a train wheel bridge 362. That is, the upper shaft 324a of the center wheel 324, the upper shaft 326a of the third wheel 326, the upper shaft 328a of the fourth wheel 328, and the upper shaft 330a of the escapement wheel 330 are supported so as to be rotatable with respect to the train wheel bridge 362. Also, the lower shaft 324b of the center wheel 324, the lower shaft 326b of the third wheel 326, the lower shaft 328b of the fourth wheel 328, and the lower shaft 330b of the escapement wheel 330 are supported so as to be rotatable with respect to the main plate 302. The pallet fork 342 is supported so as to be rotatable with respect to the main plate 302 and an pallet fork bearing 364. That is, the upper shaft 342a of the pallet fork 342 is supported so as to be rotatable with respect to the pallet fork bearing 364. The lower shaft 342b of the pallet fork 342 is rotatably supported with respect to the main plate 302.

### (Placement of Sliding Material)

In the movement (machinery) 300, the sliding material of the first example was provided as follows in the sliding portion with the escapement wheel 330 (the gearwheel portion 330d) and the pallet stone 343.

First, a portion of the sliding material obtained in the first example was separated to obtain a sliding material with a thickness of 1 µm.

An epoxy-based adhesive was applied at a thickness of 0.1 µm on the gearwheel portion 330d of the escape wheel 330 and the pallet stone 343.

Then, the separated sliding material was attached to the applied epoxy-based adhesive, and the epoxy-based adhesive was sufficiently dried by being left to stand for one hour at 25°C.

Similarly, the sliding material of the first example was also provided in the bearing portions of the center wheel 324, the third wheel 326, the fourth wheel 328, the balance staff 340a and the changeover wheel. As a result, since friction loss of the sliding portion could be reduced, the duration of the main spring could be extended.

### Example 5

In the movement (machinery) 300, the sliding material of the first example was provided as follows in the sliding portion with escape wheel 330 (the gearwheel portion 330d) and the pallet stone 343.

First, the sliding material obtained in the first example was ground to a particle diameter of 0.1 to 1 µm. Then a lubricant for timepieces (SYNTHETIC OIL 9010 (made by MOEBIUS)) and the ground-up sliding material were mixed at a ratio of 10 parts sliding material to 100 parts lubricant.

The lubricant mixed with the sliding material was applied on the gearwheel portion 330d of the escapement wheel 330 and the pallet stone 343.

Similarly, the sliding material of the first example was also provided in the bearing portions of the center wheel 324, the third wheel 326, the fourth wheel 328, the balance staff 340a and the changeover wheel. As a result, since friction loss of the sliding portion could be reduced, the duration of the main spring could be extended.

The sliding material of the present invention can be used in machines/devices of various sizes ranging from heavy machinery such as automobiles to nanomachines without restrictions on the environment it can be used, can minimize friction compared to conventional types, and has superior durability.

## Claims

1. A sliding material having hexagonal crystals of graphite that form a layer structure, and ball-shaped molecules of fullerene inserted into interlayers of the hexagonal crystals, wherein the sliding material is produced by
a step of widening the interlayer of hexagonal crystals,
the step including immersing the hexagonal crystals in a liquid mixture of sulfuric acid and nitric acid, drying the hexagonal crystal, and heating the hexagonal crystals at 1000 to 1100°C; and
a step of inserting the ball-shaped molecules into the widened interlayer of the hexagonal crystals by sublimating the ball-shaped molecules in a vacuum or in an atmosphere of an inert gas.

2. A sliding material according to claim 1, wherein the structure in which the ball-shaped molecules are inserted in interlayers of the hexagonal crystals exists in plurality repetition in the thickness direction.

3. A sliding material according to claim 1, wherein the ball-shaped molecules form a monolayer in each interlayer of the hexagonal crystals.

4. A sliding material according to claim 2, wherein the distance between the ball-shaped molecules in the thickness direction is 1.4 nanometers or less.

5. A sliding material according to claim 3, wherein the distance between the ball-shaped molecules in the thickness direction is 1.4 nanometers or less.

6. A sliding material according to claim 1, wherein the ball-shaped molecules have five-member rings or six-member rings of carbon.

7. A sliding material that is a mixture of the sliding material recited in claim 1 and a solid or fluid.

8. A sliding material wherein the sliding material recited in claim 1 is provided on a solid surface.

9. A method of manufacturing a sliding material according to claim 1, comprising
a step of widening the interlayer of hexagonal crystals of graphite forming
a layer structure;
wherein the step of widening the interlayer of hexagonal crystals includes immersing the hexagonal crystals in a liquid mixture of sulfuric acid and nitric acid, drying the hexagonal crystals, and heating the hexagonal crystals at 1000 to 1100°C; and
a step of inserting ball-shaped molecules of fullerene into the widened interlayer of the hexagonal crystals by sublimating the ball-shaped molecules in a vacuum or in an atmosphere of an inert gas.

10. A method of manufacturing a sliding material recited in claim 9, wherein the ball-shaped molecules are inserted in the interlayer of the hexagonal crystals by sublimating the ball-shaped molecules.

11. A device having a sliding portion in which at least one member slides with respect to another member, and
being provided with the sliding material recited in any one of claims 1 through 8 on the surface of at least one member of the sliding portion.

12. A timepiece having at least one gear set that transmits power and a changeover mechanism that corrects the time,
wherein the gear set and/or the changeover mechanism have/has a sliding portion in which at least one member slides with respect to another member, and
the sliding material recited in any one of claims 1 through 8 is provided on the surface of at least one member of the sliding portion.

13. A motor having a sliding portion in which at least one member slides with respect to another member, and
being provided with the sliding material recited in any one of claims 1 through 8 on the surface of at least one member of the sliding portion.

## Patentansprüche

1. Gleitmaterial mit hexagonalen Graphitkristallen, die eine Schichtstruktur bilden, und in Zwischenschichten der hexagonalen Kristalle eingeführte ballförmige Fulleren-Moleküle, welches Gleitmaterial hergestellt ist durch
einen Schritt des Aufweitens der Zwischenschicht der hexagonalen Kristalle,
den Schritt, der das Tauchen der hexagonalen Kristalle in eine flüssige Mischung von Schwefelsäure und Salpetersäure, das Trocknen der hexagonalen Kristalle und das Erhitzen der hexagonalen Kristalle auf 1000 bis 1100°C umfasst; und
einen Schritt des Einführens der ballförmigen Moleküle in die aufgeweitete Zwischenschicht der hexagonalen Kristalle durch Sublimieren der ballförmigen Moleküle in einem Vakuum oder in einer Atmosphäre aus Inertgas.

2. Gleitmaterial nach Anspruch 1, wobei die Struktur, in welche die ballförmigen Moleküle in die Zwischenschichten der hexagonalen Kristalle eingeführt werden, in mehrmaliger Wiederholung in der Dickenrichtung vorliegt.

3. Gleitmaterial nach Anspruch 1, wobei die ballförmigen Moleküle in jeder Zwischenschicht der hexagonalen Kristalle einen Monolayer bilden.

4. Gleitmaterial nach Anspruch 2, wobei der Abstand zwischen den ballförmigen Molekülen in der Dickenrichtung 1,4 Nanometer oder weniger beträgt.

5. Gleitmaterial nach Anspruch 3, wobei der Abstand zwischen den ballförmigen Molekülen in der Dickenrichtung 1,4 Nanometer oder weniger beträgt.

6. Gleitmaterial nach Anspruch 1, wobei die ballförmigen Moleküle fünf- oder sechsgliedrige Kohlenstoffringe aufweisen.

7. Gleitmaterial, das eine Mischung aus dem in Anspruch 1 angegebenen Gleitmaterial und einem Feststoff oder Fluid ist.

8. Gleitmaterial, bei dem sich das in Anspruch 1 angegebene Gleitmaterial auf einer Feststofffläche befindet.

9. Verfahren zur Herstellung eines Gleitmaterials nach Anspruch 1 umfassend
einen Schritt des Aufweitens der Zwischenschicht der hexagonalen Kristalle zur Bildung einer Schichtstruktur,
wobei der Schritt des Aufweitens der Zwischenschicht der hexagonalen Kristalle das Tauchen der hexagonalen Kristalle in eine flüssige Mischung von Schwefelsäure und Salpetersäure, das Trocknen der hexagonalen Kristalle und das Erhitzen der hexagonalen Kristalle auf 1000 bis 1100°C umfasst; und
einen Schritt des Einführens der ballförmigen Fulleren-Moleküle in die aufgeweitete Zwischenschicht der hexagonalen Kristalle durch Sublimieren der ballförmigen Moleküle in einem Vakuum oder in einer Atmosphäre aus Inertgas.

10. Verfahren zur Herstellung eine Gleitmaterials nach Anspruch 9, bei dem die ballförmigen Moleküle durch Sublimieren der ballförmigen Moleküle in die Zwischenschicht aus den hexagonalen Kristallen eingefügt werden.

11. Vorrichtung mit einem Gleitbereich, in welchem mindestens ein Teil im Verhältnis zu einem anderen Teil gleitet, und
auf der Oberfläche mindestens eines Teils des Gleitbereichs ein in einem der Ansprüche 1 bis einschliesslich 8 angegebenes Gleitmaterial vorgesehen ist.

12. Uhr mit mindestens einem kraftübertragenden Radsatz und einem zeitkorrigierenden Stellmechanismus,
wobei der Radsatz und/oder der Stellmechanismus einen Gleitbereich aufweisen bzw. aufweist und
das in einem der Ansprüche 1 bis einschliesslich 8 angegebene Gleitmaterial auf der Oberfläche mindestens eines Teils des Gleitbereichs angeordnet ist.

13. Motor mit einem Gleitbereich, in welchem mindestens ein Teil im Verhältnis zu einem anderen Teil gleitet, und
das in einem der Ansprüche 1 bis einschliesslich 8 angegebene Gleitmaterial auf der Oberfläche mindestens eines Teils des Gleitbereichs angeordnet ist.

## Revendications

1. Matériau glissant possédant des cristaux hexagonaux de graphite qui forment une structure en couche et des molécules en forme de ballon de fullerène insérées dans les intercouches des cristaux hexagonaux, où le matériau glissant est produit par:
une étape d'élargissement de l'intercouche de cristaux hexagonaux, l'étape incluant l'immersion des cristaux hexagonaux dans un mélange liquide d'acide sulfurique et d'acide nitrique, le séchage des cristaux hexagonaux et le chauffage des cristaux hexagonaux à 1000 à 1100°C; et
une étape d'insertion des molécules en forme de ballon dans l'intercouche élargie des cristaux hexagonaux par la sublimation des molécules en forme de ballon dans un vide ou dans une atmosphère d'un gaz inerte.

2. Matériau glissant selon la revendication 1, où la structure dans laquelle les molécules en forme de ballon sont insérées dans les intercouches des cristaux hexagonaux existe en plusieurs répétitions dans la direction de l'épaisseur.

3. Matériau glissant selon la revendication 1, où les molécules en forme de ballon forment une monocouche dans chaque intercouche des cristaux hexagonaux.

4. Matériau glissant selon la revendication 2, où la distance entre les molécules en forme de ballon dans la direction de l'épaisseur est de 1,4 nanomètres ou moins.

5. Matériau glissant selon la revendication 3, où la distance entre les molécules en forme de ballon dans la direction de l'épaisseur est de 1,4 nanomètres ou moins

6. Matériau glissant selon la revendication 1, où les molécules en forme de ballon possèdent des cycles à cinq membres ou des cycles à six membres de carbone.

7. Matériau glissant qui est un mélange du matériau glissant selon la revendication 1 et d'un solide ou d'un fluide.

8. Matériau glissant où le matériau glissant selon la revendication 1 est fourni sur une surface d'un solide.

9. Procédé pour la fabrication d'un matériau glissant selon la revendication 1, comprenant:
une étape d'élargissement de l'intercouche de cristaux hexagonaux de graphite formant une structure en couche,
dans lequel l'étape d'élargissement de l'intercouche de cristaux hexagonaux inclut l'immersion des cristaux hexagonaux dans un mélange liquide d'acide sulfurique et d'acide nitrique, le séchage des cristaux hexagonaux et le chauffage des cristaux hexagonaux à 1000 à 1100°C; et
une étape d'insertion de molécules en forme de ballon de fullerène dans l'intercouche élargie des cristaux hexagonaux par la sublimation des molécules en forme de ballon dans un vide ou dans une atmosphère d'un gaz inerte.

10. Procédé pour la fabrication d'un matériau glissant selon la revendication 9, dans lequel les molécules en forme de ballon sont insérées dans l'intercouche des cristaux hexagonaux par la sublimation des molécules en forme de ballon.

11. Dispositif possédant une portion glissante dans laquelle au moins un élément glisse par rapport à un autre élément, et
qui est muni du matériau glissant selon l'une quelconque des revendications 1 à 8 sur la surface d'au moins un élément de la portion glissante.

12. Appareil d'horlogerie possédant au moins un jeu d'engrenages qui transmet la puissance et un mécanisme de commutation qui corrige le temps,
dans lequel le jeu d'engrenages et/ou le mécanisme de commutation ont/a une portion glissante dans laquelle au moins un élément glisse par rapport à un autre élément, et
le matériau glissant selon l'une quelconque des revendications 1 à 8 est fourni sur la surface d'au moins un élément de la portion glissante.

13. Moteur possédant une portion glissante dans laquelle au moins un élément glisse par rapport à un autre élément, et
qui est muni du matériau glissant selon l'une quelconque des revendications 1 à 8 sur la surface d'au moins un élément de la portion glissante.
